# FASCICULE DE BREVET EUROPEEN

(11) **EP 2 203 367 B1**
(45) Date de publication et mention de la délivrance du brevet: **16.03.2011**
(21) Numéro de dépôt: 08838966.3
(22) Date de dépôt: 25.09.2008
(51) Int. Cl.: B65G 57/04, B65G 61/00

(54) **INSTALLATION DE PALETTISATION SECURISEE**
GESICHERTE PALETTIERANLAGE
SECURED PALLETIZATION FACILITY

(30) Priorité: 28.09.2007 FR 0706789
(43) Date de publication de la demande: 07.07.2010
(73) Titulaire: Sidel Participations, 76930 Octeville Sur Mer (FR)
(72) Inventeur: BONHOMME, Eric, 76930 Octeville-sur-Mer (FR)
(74) Mandataire: Cabinet Plasseraud
(86) Numéro de dépôt international: PCT/FR2008/051712
(87) Numéro de publication internationale: WO 2009/050374

(56) Documents cités:
- EP-A- 0 146 643
- EP-A- 1 445 221
- WO-A-00/20309

## Description

La présente invention concerne les installations de palettisation du type à postes fixes, disposés côte à côte, et en particulier les installations robotisées qui comportent un manipulateur pour confectionner, alternativement, des palettes chargées avec des produits, du genre caisses ou autres, amenés par un dispositif convoyeur.

La présente invention propose un aménagement à ce type d'installation de palettisation qui vise à améliorer la sécurité des opérateurs et notamment la sécurité de l'opérateur qui intervient alors que le robot est en fonctionnement.

Elle vise en effet à protéger l'opérateur qui est chargé de manipuler les palettes: lorsqu'elles sont pleines, pour les évacuer, ou, lorsqu'elles sont vides, pour les mettre en place au poste de palettisation qui vient de se libérer.

Pour des installations qui fonctionnent avec un robot de manipulation, il n'est pas rare que des produits soient lâchés par la tête de préhension et de palettisation dudit robot lors du déplacement des caisses entre le convoyeur d'amenée desdits produits et la palette sur laquelle ils sont rangés par ledit robot.

Ce genre d'incident peut survenir pour tous types d'installations ; certaines installations sont cependant plus sensibles comme celles qui comportent un robot dont la tête de préhension et de palettisation est équipée de ventouses.

Plusieurs phénomènes, pris isolément ou en combinaison, peuvent causer ces incidents ; on peut citer : - les défauts sur les emballages eux-mêmes dont certains font que la ou les ventouses n'ont pas toute leur efficacité, les problèmes liés à l'alimentation des ventouses, - les fortes accélérations que subissent les produits...etc.

Les palettiseurs comportent bien sûr des équipements de sécurité du genre cloisons et/ou portes, ainsi que des barrières immatérielles qui prennent le relais lorsque les portes sont ouvertes, par exemple, mais ces barrières de protection sont totalement inopérantes face à des produits « volants », c'est-à-dire des produits qui ont été lâchés par la tête de préhension et de palettisation alors qu'ils sont en plein mouvement.

Les dispositifs d'arrêts d'urgence classiques ne sont d'aucun secours face à ce genre d'incidents.

Or, sur ces installations de palettisation qui fonctionnent en continu, il est des moments où l'opérateur est particulièrement vulnérable : c'est le cas notamment lorsqu'il évacue une palette pleine et c'est également le cas, plus critique encore, lorsqu'il installe, au poste de palettisation qui vient d'être libéré, une nouvelle palette, vide.

La présente invention propose un aménagement original à ce type d'installation de palettisation qui vise à assurer une protection concrète et totale de l'opérateur, même lorsque le robot de palettisation est en fonctionnement. L'opérateur n'a pas besoin d'arrêter l'installation pour retirer une palette pleine en toute sécurité; il peut intervenir dans la zone de la palette pleine pendant que le robot confectionne la palette voisine.

L'installation selon l'invention comporte - des parois qui habillent latéralement la structure générale, ou châssis, et - des portes d'accès aux postes de palettisation et elle comporte, en plus, un système de cloisons qui est constitué : - d'une paroi fixe qui sépare deux postes adjacents de palettisation et - d'un carénage, mobile d'un poste à l'autre, en forme de dièdre pour envelopper au moins l'arrière et le dessus d'une palette pleine, et ces parois latérales, ladite paroi fixe et ledit carénage coopèrent ensemble pour transformer alternativement chaque poste de palettisation en une sorte de sas à palette, laquelle transformation s'effectue automatiquement, avec l'aide du robot, avant l'ouverture de la porte d'accès audit poste pour permettre à l'opérateur de retirer la palette pleine et d'introduire une nouvelle palette, vide.

Par cet aménagement, l'opérateur est automatiquement isolé de la zone dangereuse de l'installation ; il est totalement isolé de la zone active de l'installation où circulent le robot manipulateur et les produits qui sont déplacés par ce dernier.

Toujours selon l'invention, le carénage mobile est constitué - d'un panneau vertical faisant office de fond pour le sas, - d'un panneau horizontal faisant office de plafond et, selon le cas, - d'un petit panneau frontal qui fait la jonction entre ledit plafond et la poutre disposée à la partie supérieure de la structure.

Selon une autre disposition de l'invention, le carénage mobile est guidé - sur un rail qui est disposé à l'arrière du fond du poste de palettisation et - sur un rail disposé au niveau de la poutre supérieure frontale de la structure.

Toujours selon l'invention, la manipulation du carénage mobile s'effectue directement au moyen du robot de manipulation des produits, lequel robot comporte, à cet effet, un doigt, en forme de loquet qui coopère avec un mentonnet disposé sur ledit carénage, à sa partie supérieure médiane.

Selon une autre disposition de l'invention, la poutre supérieure frontale de la structure comporte trois rails formant glissières : un pour le guidage du carénage mobile et deux pour le guidage des portes d'accès, lesdites portes d'accès étant coulissantes.

Toujours selon l'invention, l'installation comporte, sur le châssis, des moyens pour détecter la position du carénage par rapport à chaque poste de palettisation

Selon une autre disposition de l'invention, l'installation comporte des moyens de quadrillage des zones d'intervention de la tête de préhension et de palettisation, lesquels moyens sont constitués de cames disposées, d'une part, transversalement sur le châssis, en regard des postes de palettisation et, d'autre part, longitudinalement sur la poutre porteuse de la tête de palettisation, lesquelles cames coopèrent avec des organes du type contacteurs qui, par l'intermédiaire d'un automate, et en fonction des informations sur la position du carénage, conditionnent les possibilités de mouvement de ladite tête de préhension et de palettisation..

Toujours selon l'invention, le carénage est transparent, réalisé en matériau thermoplastique du type polycarbonate, polyéthylène téréphtalate glycol.

Mais l'invention sera encore détaillée à l'aide de la description suivante et des dessins annexés, donnés à titre indicatif, et dans lesquels :
- la figure 1 représente une installation, selon l'invention, comportant deux postes de palettisation; l'une des palettes est en cours de chargement et l'autre palette est pleine, prête à être évacuée,
- la figure 2 montre l'évacuation de la palette pleine qui était en cours de chargement figure 1 et le commencement du chargement de la nouvelle palette,
- la figure 3 représente, de façon schématique, une vue en plan de l'installation, montrant simplement les zones qui sont accessibles par la tête de préhension et de palettisation,
- la figure 4A est une élévation en coupe schématique partielle, selon 4-4 de la figure 3, montrant un mode de réalisation de la partie arrière de l'installation selon l'invention,
- la figure 4B est également une élévation en coupe schématique partielle de la figure 3, selon 4-4, montrant un mode de réalisation de la partie avant de l'installation selon l'invention.

L'installation de palettisation représentée sur les figures comprend une structure faisant office de châssis (1), laquelle structure enveloppe deux postes A et B de palettisation, et elle supporte un robot (2) manipulateur du type trois ou quatre axes, selon le cas, qui dessert lesdits postes A et B.

Ce robot (2) comprend : - une poutre (2P) qui s'étend longitudinalement, dans le sens de l'arrivée des produits (3) et qui se déplace transversalement sous l'effet de moyens appropriés, - un chariot (2C) qui est porté par ladite poutre (2P) et qui se déplace longitudinalement sur cette dernière, et, - un mât (2M) qui est porté et guidé par ledit chariot (2C) pour se déplacer verticalement.

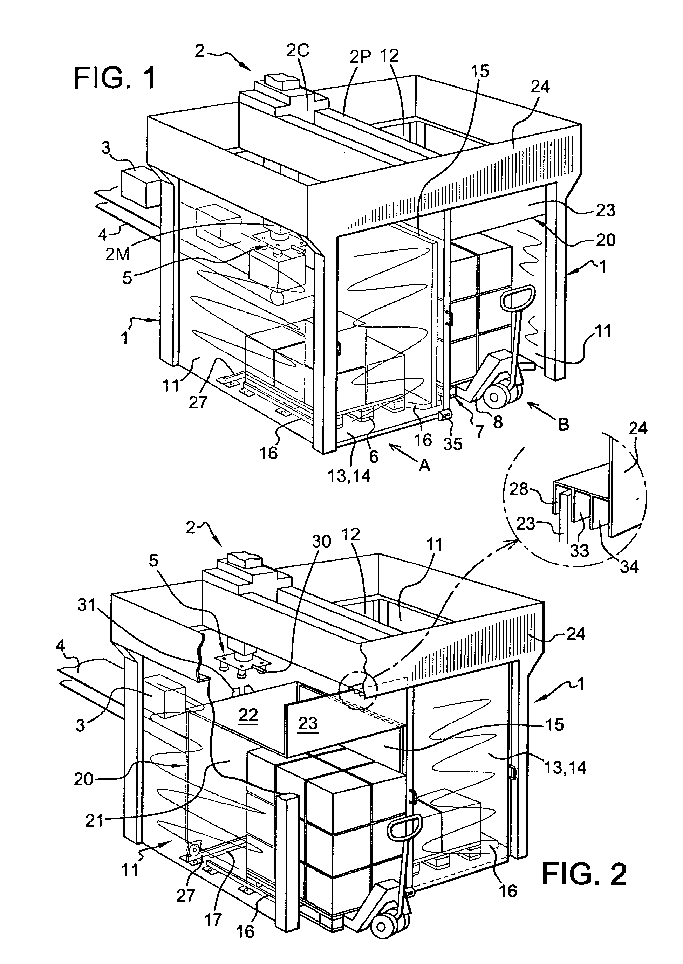

Les produits (3) à palettiser sont amenés, par un dispositif convoyeur (4), dans la partie centrale arrière de l'installation et ils sont pris en charge par le robot (2) et en particulier par sa tête (5) de préhension et de palettisation qui se situe à l'extrémité inférieure du mât (2M) ; cette tête (5) pose les produits (3) sur la palette appropriée, en l'occurrence, comme représentée figure 1, la palette (6) du poste A.

Toujours figure 1, le poste B est occupé par une palette (7) pleine, laquelle palette est prête à être évacuée au moyen d'un engin (8) qui est adapté au transport d'une palette.

Le châssis (1) de l'installation est habillé de parois (11) latérales qui sont transparentes et d'une paroi (12) sur sa partie arrière. Sur l'avant de l'installation, le châssis est muni de deux portes (13, 14) transparentes également; ces deux portes sont coulissantes pour permettre un accès frontal aux différents postes de palettisation.

Les postes A et B de palettisation sont disposés entre les parois (11) latérales et ils sont séparés par une paroi (15) qui est fixe, verticale et parallèle auxdites parois (11) latérales. Cette paroi (15) est également transparente ; elle s'étend sur une longueur qui est sensiblement supérieure à celle des palettes et sur une hauteur qui est, de même, sensiblement supérieure à celle desdits palettes lorsqu'elles sont chargées.

Ces postes A et B comportent, à leur partie inférieure, au sol, des guides longitudinaux (16) et des butées (17) à l'arrière, pour positionner correctement chaque palette (6) et (7), dans le référentiel du robot (2).

Une cloison complémentaire en forme de carénage (20), qui présente la particularité d'être mobile, coopère avec les différentes parois énoncées précédemment et en particulier: - les parois latérales (11) et - la paroi (15), pour délimiter de façon alternative et temporaire, le poste A et le poste B afin de les rendre accessibles de façon sélective et exclusive, soit à l'opérateur, soit à la tête (5) du robot (2).

Cette délimitation permet de transformer le poste A, ou B selon le cas, en une sorte de sas à palette dans lequel la palette pleine est enfermée, isolée de la zone dans laquelle se déplace la tête (5) du robot (2). La zone comportant la palette pleine est accessible, pour l'opérateur, uniquement par l'une des portes frontale (13) ou (14).

Ce carénage (20) est, par exemple, transparent, réalisé en matériau thermoplastique du type polycarbonate, polyéthylène téréphtatate glycol, comme les autres parois de l'installation. La section de ce carénage (20) est en forme de double dièdre, ou baïonnette, et il comprend :
- un panneau vertical qui constitue le fond (21) du sas et qui couvre l'arrière de la palette lorsqu'elle est pleine,
- un panneau horizontal faisant office de plafond (22), qui couvre le dessus de ladite palette et, selon le cas,
- un petit panneau (23) vertical en façade, qui fait la jonction entre ledit plafond (22) et la poutre (24) qui constitue le fronton de la structure (1).

Le plafond (22) se situe à un niveau qui est le plus bas possible, compatible avec la hauteur du chargement de la palette bien sûr, pour laisser un maximum d'espace au robot (2) manipulateur.

Le carénage (20) est mobile entre les parois (11) latérales du châssis (1) pour habiller alternativement les postes A ou B de palettisation. Figure 1, le carénage (20) habille le poste B alors que, figure 2, il habille le poste A.

Comme détaillé plus loin, des moyens appropriés, contacteurs secs et relais, par exemple, contrôlent le positionnement du carénage (20) pour assurer la sécurité de l'opérateur, et un automate coordonne et permet la manoeuvre de la porte (13) ou (14) qui donne l'accès au sas dans lequel se situe une palette pleine.

Le carénage (20) est guidé par des rails :
- un rail (27) qui porte le fond (21), lequel rail (27) est disposé derrière les butées (17) qui sont situées à l'arrière des postes A et B des palettes (6) et (7), respectivement,
- un rail (28) disposé, par exemple, sur la poutre (24) du châssis (1) pour guider la partie supérieure du panneau (23) frontal qui s'étend au-dessus du plafond (22).

La manoeuvre du carénage (20), pour le faire passer d'un poste à l'autre, est réalisée par le robot (2) lui-même qui comporte des moyens pour accrocher le dessus de la paroi (21), par exemple.

Comme représenté figure 2, le robot (2) comporte, sur sa tête (5), un doigt en forme de loquet (30), lequel loquet (30) est aménagé pour coopérer avec un mentonnet (31) qui est disposé dans la partie supérieure médiane du fond (21) ou sur le plafond (22).

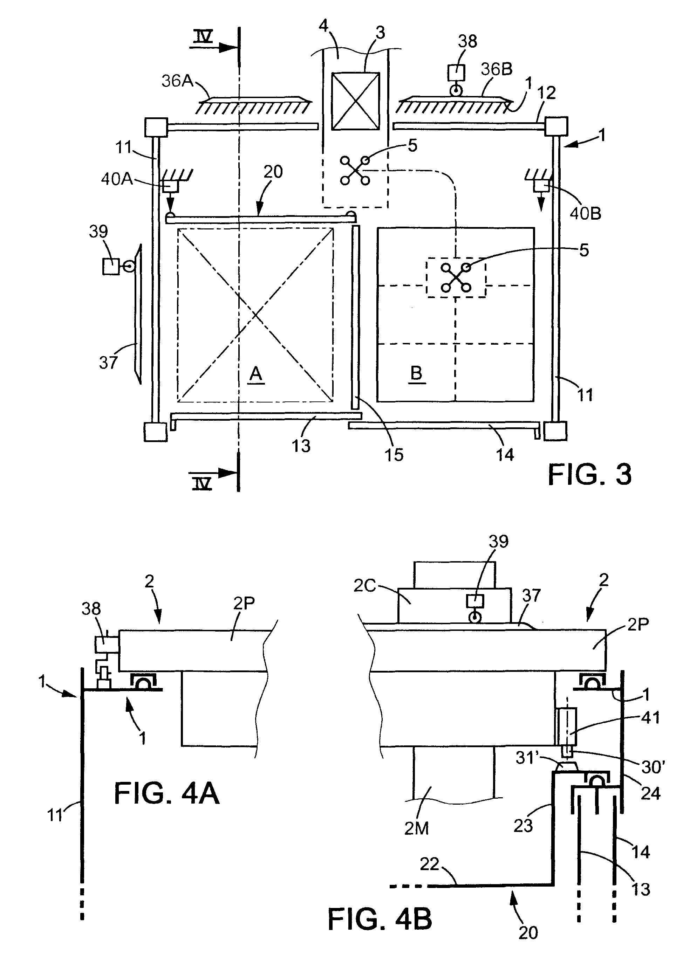

D'autres formes de réalisation des moyens de guidage et de déplacement du carénage (20) sont présentées plus loin en liaison avec les figures 4.

La poutre (24) frontale du châssis (1) comporte deux autres rails (33) et (34) pour le guidage des portes (13) et (14) respectivement. Ces portes (13) et (14) sont également guidées à leur partie inférieure par un sabot (35) qui est disposé au sol, à l'avant de l'installation.

La figure 3 représente, de façon schématique, selon une vue en plan, l'installation selon l'invention avec, notamment, ses deux postes A et B de palettisation.

Ces postes sont délimités par les parois latérales (11) de l'installation et par la paroi médiane centrale (15). En face avant, on retrouve les portes (13) et (14), du type coulissantes, par exemple, qui ferment, respectivement, le poste A et le poste B.

On retrouve également sur cette figure 3, sous la forme d'une simple paroi verticale, le carénage (20) qui se déplace d'un poste à l'autre pour former avec la paroi médiane (15), la paroi latérale (11) correspondante et la porte (13) ou (14) selon le cas, une sorte de sas au niveau de chaque poste A et B.

Pour compléter de façon efficace tous les moyens mis en oeuvre pour assurer la sécurité de l'opérateur, l'installation comporte des moyens qui permettent de définir la zone dans laquelle le robot (2) peut évoluer et en particulier sa tête (5) de préhension et de palettisation des produits (3).

Ainsi, des cames judicieusement disposées permettent de définir et d'imposer les zones de travail qui correspondent en fait aux postes de palettisation A et B et à l'espace situé entre ces zones et le dispositif convoyeur (3) qui alimente l'installation.

Deux cames (36A) et (36B) sont positionnées sur le châssis (1), en regard des postes A et B de palettisation, respectivement. Une autre came (37), positionnée sur la poutre (2P) se situe en regard des deux postes A et B de palettisation.

En d'autres termes, les cames (36A, 36B) s'étendent transversalement ; elles sont perpendiculaires au sens d'arrivée des produits (3) alors que la came (37) est positionnée longitudinalement, selon le sens d'arrivée desdits produits..

La poutre (2P) comporte, à son extrémité arrière, comme représenté schématiquement figure 4a, un organe du type commutateur (38) qui coopère avec les cames (36A, 36B).

Le chariot (2C) comporte, lui aussi, un organe du type commutateur (39) qui coopère avec la came (37), laquelle came étant disposée sur la poutre (2P).

D'autres moyens disposés sur l'installation permettent de contrôler et de détecter la position du carénage (20) et en particulier sa position active de fermeture soit au niveau du poste A, soit au niveau du poste B de palettisation.

Sur la figure 3, on remarque des organes de détection du type commutateurs, un commutateur (40A) situé du côté du poste A et un commutateur (40B) situé du côté du poste B de palettisation.

Ainsi, au moyen de l'automate, le système de cames, combiné avec les moyens de détection de la position du carénage (20), permet d'imposer à la tête (5) une zone de travail, laquelle zone de travail correspondant au poste B, comme représenté figure 3, et ces différents moyens offrent à l'opérateur une grande sécurité lorsqu'il accède au poste A.

La figure 4b montre également un autre mode de réalisation des moyens de déplacement du carénage (20), dans le sens transversal.

Ce carénage (20) est toujours guidé sur le châssis (1) et comporte, sur son extrémité supérieure avant, un mentonnet (31 ') qui coopère avec un loquet (30'), lequel loquet (30') est actionné au moyen d'un vérin (41) qui est solidaire de la partie frontale du robot (2) et en particulier de la poutre (2P).

## Revendications

1. Installation de palettisation de produits (3) qui sont manipulés par un robot (2), lequel robot (2) est installé dans un châssis (1) habillé de parois (11) latérales et de portes (13, 14) donnant accès à des postes A et B de palettisation,
**caractérisée en ce qu'**elle comporte un système de cloisonnement qui comprend : - une paroi (15) fixe qui sépare deux postes de palettisation adjacents, et - un carénage (20), mobile d'un poste à l'autre, en forme de dièdre pour envelopper au moins l'arrière et le dessus d'une palette pleine, et ces parois latérales (11), ladite paroi fixe (15) et ledit carénage (20) coopèrent pour transformer alternativement chaque poste de palettisation en une sorte de sas à palette, laquelle transformation s'effectue automatiquement, avec l'aide dudit robot (2), avant l'ouverture de la porte qui donne l'accès à la palette pleine, ce qui permet à l'opérateur d'enlever ladite palette pleine.

2. Installation de palettisation selon la revendication 1, **caractérisée en ce qu'**elle comporte un carénage (20) qui est constitué - d'un panneau vertical faisant office de fond (21) pour le sas, - d'un panneau horizontal faisant office de plafond (22) et - d'un petit panneau (23) frontal qui fait la jonction entre ledit plafond (22) et le châssis (1), et en particulier la poutre (24) frontale disposée à la partie supérieure avant dudit châssis (1).

3. Installation de palettisation selon la revendication 2, **caractérisée en ce qu'**elle comporte un carénage (20) qui est guidé sur un rail (27) disposé à l'arrière du fond des postes de palettisation et sur un rail (28) disposé au niveau de la poutre (24) supérieure frontale du châssis (1).

4. Installation de palettisation selon la revendication 3, **caractérisée en ce qu'**elle comporte un carénage (20) dont la manipulation s'effectue directement au moyen du robot (2) de manipulation des produits, lequel robot (2) comporte, à cet effet, un loquet (30, 30') qui coopère avec un mentonnet (31, 31') disposé sur ledit carénage (20), à sa partie supérieure médiane.

5. Installation de palettisation selon la revendication 3, **caractérisée en ce qu'**elle comporte, au niveau de la poutre (24) frontale du châssis (1), trois rails formant des glissières : un rail (28) pour le guidage du carénage (20) et deux rails (33, 34), pour le guidage des portes (13, 14), respectivement, lesdites portes étant coulissantes.

6. Installation de palettisation selon la revendication 1, **caractérisée en ce qu'**elle comporte, sur le châssis (1), des moyens (40A, 40B) de détection de la position du carénage (20) par rapport à chaque poste A et B de palettisation

7. Installation de palettisation selon la revendication 6, **caractérisée en ce qu'**elle comporte des moyens de quadrillage des zones d'intervention de la tête (5) de préhension et de palettisation, lesquels moyens sont constitués de cames : d'une part, des cames (36A et 36B) disposées transversalement sur le châssis, respectivement en regard des postes A et B de palettisation et, d'autre part, une came (37) disposée longitudinalement sur la poutre (2P) du robot (2), lesquelles cames coopèrent avec des organes du type contacteurs (38, 39) qui, par l'intermédiaire d'un automate, et en fonction des informations sur la position du carénage (20), conditionnent les possibilités de mouvement de ladite tête (5) de préhension et de palettisation.

8. Installation de palettisation selon la revendication 1, **caractérisée en ce qu'**elle comporte un carénage (20) transparent, réalisé en matériau thermoplastique du type polycarbonate, polyéthylène téréphtalate glycol.

## Claims

1. Palletization facility for products (3) which are manipulated by a robot (2), said robot (2) being installed in a framework (1) enclosed with lateral walls (11) and doors (13, 14) that provide access to palletizing stations A and B,
wherein said facility comprises a partitioning system which comprises: - a fixed wall (15) which separates two adjacent palletizing stations, and - a mobile cowling (20) which moves from one station to another, of a dihedral form in order to cover at least the rear and the top of a full pallet, and said lateral walls (11), said fixed wall (15), and said cowling (20) cooperate together to transform each palletizing station in turn into a sort of pallet chamber, said transformation occurring automatically, with the aid of said robot (2), before the opening of the door which gives access to the full pallet, which allows the operator to remove said full pallet.

2. Palletization facility according to claim 1, comprising a cowling (20) which is composed of - a vertical panel acting as a back (21) of the chamber, - a horizontal panel acting as a ceiling (22), and - a small front panel (23) which acts as the connection between said ceiling (22) and the framework (1) and in particular the front beam (24) arranged on the upper front part of said framework (1).

3. Palletization facility according to claim 2, comprising a cowling (20) which is guided on a rail (27) arranged at the bottom of the back of the palletizing stations and on a rail (28) arranged on the front upper beam (24) of the framework (1).

4. Palletization facility according to claim 3, comprising a cowling (20) manipulated directly by means of the material handling robot (2), said robot (2) comprising for this purpose a latch (30, 30') which cooperates with a catch (31, 31') arranged on the upper middle part of said cowling (20).

5. Palletization facility according to claim 3, comprising, on the front beam (24) of the framework (1), three rails that form guide rails: one rail (28) to guide the cowling (20) and two rails (33, 34) to guide the respective doors (13, 14), said doors being sliding doors.

6. Palletization facility according to claim 1, comprising, on the framework (1), means (40A, 40B) for detecting the position of the cowling (20) relative to each palletizing station A and B.

7. Palletization facility according to claim 6, comprising means for defining a grid for the areas of intervention of the gripping and palletizing head (5), said means being composed of cams: some cams (36A and 36B) arranged transversely on the framework, respectively facing palletizing stations A and B, and one cam (37) arranged longitudinally on the beam (2P) of the robot (2), said cams cooperating with contact type mechanisms (38, 39) which, by means of an automated control system, and as a function of information on the cowling (20) position, determine the movement possibilities for said gripping and palletizing head (5).

8. Palletization facility according to claim 1, comprising a transparent cowling (20) made of thermoplastic material of the polycarbonate, polyethylene terephthalate glycol type.

## Patentansprüche

1. Anlage zur Palettierung von Produkten (3), die durch einen Roboter (2) gehandhabt werden, der Roboter (2) in einem Gestell (1) installiert, verkleidet durch Seitenwände (11) und durch Türen (13, 14), Zugang eröffnend für die Stationen A und B zur Palettierung,
**dadurch gekennzeichnet, dass** sie ein Abteilungssystem umfasst, das enthält: - eine feststehende Wand (15), die zwei angrenzende Palettierungsstationen trennt, und - eine Verkleidung (20), beweglich von einer Station zur anderen, in Winkelform, um mindestens den Hinterteil und die Oberseite einer vollen Palette zu umhüllen, und die Seitenwände (11), die feststehende Wand (15) und die Verkleidung (20) wirken zusammen, um alternativ jede Palettierungsstation in eine Art Palettenschleuse zu transformieren, die Transformation erfolgt automatisch mit Hilfe des Roboters (2), vor dem Öffnen der Tür, die den Zugang zu der vollen Palette eröffnet, jene, die es dem Bedienenden ermöglicht, die volle Palette zu entfernen.

2. Anlage zur Palettierung gemäß Anspruch 1, **dadurch gekennzeichnet, dass** sie eine Verkleidung (20) umfasst, die aus einer vertikalen Platte besteht, die Funktion des Hintergrunds (21) für die Schleuse erfüllend, - aus einer horizontalen Platte, die Funktion der Decke (22) erfüllend und - aus einer kleinen vorderen Platte (23), die die Verbindung zwischen der Decke (22) und dem Gestell (1) herstellt, und insbesondere dem Träger (24), an der Vorderseite im oberen vorderen Abschnitt des Gestells (1) angeordnet.

3. Anlage zur Palettierung gemäß Anspruch 2, **dadurch gekennzeichnet, dass** sie eine Verkleidung (20) umfasst, die auf einer Schiene (27) geführt wird, angeordnet am hinteren Boden der Palettierungsstation und auf einer Schiene (28), angeordnet auf der Höhe des oberen vorderen Trägers des Gestells (1).

4. Anlage zur Palettierung gemäß Anspruch 3, **dadurch gekennzeichnet, dass** sie eine Verkleidung (20) umfasst, deren Handhabung direkt durch Mittel des Roboters (2) zur Handhabung der Produkte erfolgt, der Roboter umfasst, zu diesem Zweck, ein Schnappschloss (30, 30'), das mit einem Spurkranz (31, 31') zusammenarbeitet, angeordnet auf der Verkleidung (20), in ihrem oberen mittleren Abschnitt.

5. Anlage zur Palettierung gemäß Anspruch 3, **dadurch gekennzeichnet, dass** sie auf der Höhe des vorderen Trägers (24) des Gestells (1) drei Schienen umfasst, Laufschienen bildend: eine Schiene (28) zur Führung der Verkleidung (20) und zwei Schienen (33, 34) zur Führung der jeweiligen Türen (13, 14), wobei die Türen verschiebbar sind.

6. Anlage zur Palettierung gemäß Anspruch 1, **dadurch gekennzeichnet, dass** sie auf dem Gestell (1) Mittel zur Erfassung (40A, 40B) der Position der Verkleidung (20) im Verhältnis zu jeder Palettierungsstation A und B umfasst.

7. Anlage zur Palettierung gemäß Anspruch 6, **dadurch gekennzeichnet, dass** sie Mittel zum Rastern der Eingriffsbereiche des Kopfes (5) zum Greifen und Palettieren umfasst, die Mittel bestehend aus Nocken: in einem Abschnitt, Nocken (36A und 36B) quer liegend auf dem Gestell angeordnet, jeweils den Palettierungsstationen A und B gegenüberstehend und, in einem anderen Abschnitt, eine Nocke (37), längs auf dem Träger (2P) des Roboters (2) angeordnet, die Nocken zusammenarbeitend mit einem Kontaktmechanismus (38, 39), der über das Zwischenglied eines Automaten, und abhängig von den Informationen über die Position der Verkleidung (20) die Bewegungsmöglichkeiten des Kopfes (5) zum Greifen und Palettieren konditioniert.

8. Anlage zur Palettierung gemäß Anspruch 1, **dadurch gekennzeichnet, dass** sie eine transparente Verkleidung (20) umfasst, ausgeführt aus thermoplastischem Material des Typs Polycarbonat, Polyethylenterephtalatglykol.
